**Europäisches Patentamt**

**European Patent Office**

**Office européen des brevets**

(11) Veröffentlichungsnummer : **0 083 693**
**B1**

(12) **EUROPÄISCHE PATENTSCHRIFT**

(45) Veröffentlichungstag der Patentschrift :
04.03.87

(21) Anmeldenummer : 82109494.3

(22) Anmeldetag : 14.10.82

(51) Int. Cl.⁴ : **C 08 L 25/00, C 04 B 26/04,
C 08 J 9/36, C 09 D 5/34**

(54) Putz, enthaltend Bindemittel auf der Basis organischer Kunstharze und Füllstoffe.

(30) Priorität : 08.01.82 DE 3200342

(43) Veröffentlichungstag der Anmeldung :
20.07.83 Patentblatt 83/29

(45) Bekanntmachung des Hinweises auf die Patenterteilung : 04.03.87 Patentblatt 87/10

(84) Benannte Vertragsstaaten :
AT BE CH DE FR GB IT LI LU NL SE

(56) Entgegenhaltungen :
DE-B- 1 203 953
US-A- 3 583 884
CHEMICAL ABSTRACTS, Band 94, 1981, Nr. 51902u,
Columbus, Ohio, US

(73) Patentinhaber : CALUPLAST Farbenfabriken Wichmann GmbH & Co.
Everswinkeler Strasse 66
D-4410 Warendorf 2 (DE)

(72) Erfinder : Fedder, Heinz
Franz-Belzer-Strasse 26
D-7502 Malsch (DE)

(74) Vertreter : Habbel, Hans-Georg, Dipl.-Ing.
Postfach 3429 Am Kanonengraben 11
D-4400 Münster (DE)

**Beschreibung**

Die Erfindung betrifft einen Putz, enthaltend Bindemittel auf der Basis organischer Kunstharze und Füllstoffe zum Aufbringen auf Polystyrol-Hartschaumplatten.

Putze dieser Art sind bekannt und werden zur Erzielung einer dekorativen und schützenden Wirkung auf Innen- und Außenwänden von Gebäuden aufgebracht. Da seit einiger Zeit zunehmend Wert auf eine gute Wärmedämmung von Gebäuden gelegt wird, werden häufig Platten aus Kunststoffschäumen, insbesondere aus aufgeschäumtem Polystyrol, auf die zu dämmenden Wände aufgebracht. Wegen ihrer mangelnden mechanischen Stabilität und ihrer unzureichenden Witterungsbeständigkeit ist es erforderlich, diese Platten mit einer äußeren Verkleidung zu versehen. Bei der Anwendung von Putzen auf der Basis organischer Kunstharze war man bisher auf wäßrige Dispersionsputze beschränkt, wenn diese auf Polystyrol-Hartschaumplatten aufgebracht werden sollten, da lösungsmittelhaltige Putze die Hartschaumplatten angreifen und die Schaumstruktur zerstören. Die bisher verwendeten wäßrigen Dispersionsputze weisen nun aber den Nachteil auf, daß sie bei kaltem und feuchtem Wetter nur sehr langsam aushärten und bei Temperaturen unterhalb 5 °C praktisch nicht mehr anwendbar sind.

So wird in der DE-AS 12 03 953 ein Verfahren zum Überziehen von Formteilen aus Polystyrolschaum beschrieben, bei welchem eine wäßrige Emulsion eingesetzt wird, die also die vorstehend erläuterten Nachteile aufweist.

In der Veröffentlichung CHEMICAL ABSTRACTS, Band 94, 1981, Nr. 51902u, wird ein Beschichtungsmaterial für Baumaterialien beschrieben, wobei die Baumaterialien offensichtlich nicht aus Polystyrol-Hartschaumplatten bestehen.

Schließlich wird in der US-PS 35 83 884 ein Überzugsmaterial für Gegenstände aus geschäumtem Polystyren beschrieben, der nicht als Putz aufgetragen wird, sondern nur einen Überzugsfilm bilden soll, der in einer Stärke von 0,02 mm bis 0,7 mm aufgetragen wird. Mit einer Putzbeschichtung ist diese Arbeitsweise nicht vergleichbar.

Es ist Aufgabe der Erfindung, einen Putz zu schaffen, der auf Polystyrol-Hartschaumplatten anwendbar ist, ohne die Schaumstruktur anzugreifen und der auch bei kalter Witterung gut verarbeitbar ist und schnell aushärtet.

Diese Aufgabe wird bei einem Putz der eingangs genannten Art erfindungsgemäß dadurch gelöst, daß er

a) 12 bis 60 Gew.-Teile Kunstharz auf der Basis eines Styrol-Acrylat-Copolymerisats,

b) 5 bis 33 Gew.-Teile Acrylatester-Lackharz,

c) 74 bis 154 Gew.-Teile aromatenfreies Testbenzin,

d) 6 bis 30 Gew.-Teile aromatisches Lösungsmittel und

e) 470 bis 1 200 Gew.-Teile Füllstoffe enthält.

Ein geeignetes Kunstharz auf der Basis eines Styrol-Acrylat-Copolymerisats ist unter der Bezeichnung Pliolite® AC4 im Handel erhältlich, ein geeignetes Acrylatester Lackharz als 45 %ige Lösung in einem Aliphatengemisch mit einem Siedebereich von 157 bis 193 °C unter der Bezeichnung Paraloid® B67MT, und ein geeignetes urethanmodifiziertes Alkydharz wird unter der Bezeichnung Heso Alkyd 645SU® vertrieben. Das als Lösungsmittel verwendete aromatenfreie Testbenzin ist als Handelsprodukt unter der Bezeichnung Shellsol-T® erhältlich. Als aromatisches Lösungsmittel wird Toluol bevorzugt.

Als Füllstoffe enthält der erfindungsgemäße Putz vorteilhaft

1,8 bis 6,6 Gew.-Teile Acrylharz-Fasern,

168 bis 576 Gew.-Teile Calciumcarbonat und

300 bis 600 Gew.-Teile Sand (Siliciumdioxid).

Der erfindungsgemäße Putz greift überraschenderweise Polystyrol-Hartschaum trotz seines Gehaltes an aromatischen Lösungsmitteln nicht an. Er ist gut verarbeitbar und kann auch bei kalter und feuchter Witterung angewendet werden. Normalerweise härtet er über Nacht aus, nur bei extrem niedrigen Temperaturen kann die Aushärtung zwei bis drei Tage dauern. Auf nassen und überfrorenen Untergründen sollte der Putz allerdings nicht appliziert werden. In diesem Zusammenhang ist zu betonen, daß der Putz zwar auf Polystyrol-Hartschaumplatten ganz besondere Vorteile bietet, seine Anwendung jedoch nicht auf derartige Untergründe beschränkt ist. Auch auf mineralischen Untergründen, beispielsweise Mauerwerk oder Beton, ergibt der Putz Beschichtungen mit guter dekorativer und schützender Wirkung und die Vorteile seiner guten Verarbeitbarkeit beinahe zu jeder Witterung kommt auch hier zum Tragen.

Der erfindungsgemäße Putz enthält vorteilhaft zusätzlich zu den bisher genannten Bestandteilen

6 bis 30 Gew.-Teile urethanmodifiziertes Alkydharz,

12 bis 36 Gew.-Teile Monoisobutyläther des Propylenglykols (Handelsprodukt : Napsol® PBJ1),

1,2 bis 6,0 Gew.-Teile Dioctylphthalat (Handelsprodukt : Palatinol® AH),

18 bis 60 Gew.-Teile Chlorparaffine-Weichharz (Handelsprodukt: Witaclor® LF),

1,2 bis 6,0 Gew.-Teile oberflächenaktive aliphatische Fettsäure mit stark polaren Aminoamidgruppen (Handelsprodukt : Peral 300K®),

6,0 bis 13,2 Gew.-Teile mittelkettiges Silikonharz,

0,36 bis 8,4 Gew.-Teile Acrylatester-Lackharz-Entlüfter (Handelsprodukt : Perenol® E1),

**0 083 693**

72 bis 84 Gew.-Teile eines Gemisches bestehend aus 84 % aromatenfreiem Testbenzin (Handelsprodukt : Shellsol-T®), 10 % Magnesiumsilicat, 1 % Alkydglykoläther eines phosphorsauren Aminsalzes (Handelsprodukt : Borchigen® PB60) und 5 % Methylalkohol

und er enthält vorteilhaft 36 bis 84 Gew.-Teile Pigmente.

Zur Herstellung des Putzes werden die einzelnen Bestandteile nacheinander in eine Mischvorrichtung gegeben und solange gemischt, bis sich eine gleichmäßige Mischung von pastöser Konsistenz ergibt. Die Applikation erfolgt im Handauftragsverfahren, beispielsweise mit einer Kelle oder mit einer Putzmaschine.

Im folgenden wird die Erfindung anhand eines Ausführungsbeispieles näher erläutert.

In einen Mischer werden nacheinander folgende Bestandteile eingefüllt und homogen vermischt :

30,0 Gew.-Teile Styrol-Acrylat-Copolymeres Harz (Pliolite® AC4),
76,0 Gew.-Teile Aromatenfreies Testbenzin (Shellsol-T®)
11,0 Gew.-Teile Aromatisches Lösemittel (Toluol)
40,0 Gew.-Teile einer 45 %igen Lösung eines Acrylatester-Lackharzes in einem Aliphatengemisch mit einem Siedebereich von 157 bis 193 °C (Paraloid® B67MT)
15,0 Gew.-Teile Urethanmodifiziertes Alkydharz (Heso Alkyd 645SU®)
3,5 Gew.-Teile Acrylharz-Faser
30,0 Gew.-Teile Calciumcarbonat (Calcidar® BL)
100,0 Gew.-Teile Calciumcarbonat
345,0 Gew.-Teile Siliciumdioxid (Silbersand)
180,0 Gew.-Teile Calciumcarbonat
20,0 Gew.-Teile Monoisobutyläther des Propylenglykols (Napsol® PBJ1)
3,0 Gew.-Teile Dioctylphtalat (Palatinol® AH)
35,0 Gew.-Teile Chlorparaffine-Weichharz (Witaclor® LF)
3,0 Gew.-Teile Oberflächenaktive Fettsäure mit bestimmter Länge der aliphatischen Kette mit stark polaren Aminoamidgruppen (Peral 300K®)
8,0 Gew.-Teile Mittelkettiges Siliconharz
0,5 Gew.-Teile Acrylatester-Lackharz-Entlüfter (Perenol® E1)
50,0 Gew.-Teile Gemisch aus :
84,0 Gew.-Teile Aromatenfreiem Testbenzin (Shellsol-T®)
10,0 Gew.-Teile Magnesiumsilicat
1,0 Gew.-Teile Alkydglykoläther eines phosphorsauren Aminsalzes (Borchigen® PB60)
5,0 Gew.-Teile Methylalkohol
50,0 Gew.-Teile Titandioxid

Der fertige Putz wird mit einer Kelle auf eine mit einer Polystyrol-Hartschaumplatte gedämmte Wand in einer Schichtstärke von ca. 1,5 cm aufgetragen. Bei einer Temperatur von 15 °C ist er nach 12 Stunden ausgehärtet. Er haftet fest auf dem Untergrund und bildet eine dekorative und witterungsbeständige Schutzschicht.

Bei einer Temperatur von 2 °C wird in gleicher Weise eine mit einer Dämmplatte versehene Wand geputzt. Die Aushärtezeit beträgt in diesem Fall ca. 48 Stunden.

In einem weiteren Versuch wird der Putz auf ein Mauerwerk aufgetragen. Hierbei wird als zusätzliche Armierung ein Glasseidengittergewebe eingearbeitet. Auch auf diesem Untergrund ergibt sich eine gute Haftung und eine einwandfreie Putzschicht.


**Patentansprüche**

1. Putz, enthaltend Bindemittel auf der Basis organischer Kunstharze und Füllstoffe, zum Aufbringen auf Polystyrol-Hartschaumplatten, dadurch gekennzeichnet, daß er
   a) 12 bis 60 Gew.-Teile Kunstharz auf der Basis eines Styrol-Acrylat-Copolymerisats,
   b) 5 bis 33 Gew.-Teile Acrylatester-Lackharz,
   c) 74 bis 154 Gew.-Teile aromatenfreies Testbenzin,
   d) 6 bis 30 Gew.-Teile aromatisches Lösungsmittel und
   e) 470 bis 1 200 Gew.-Teile Füllstoffe enthält.

2. Putz nach Anspruch 1, dadurch gekennzeichnet, daß er zusätzlich 6 bis 30 Gew.-Teile urethanmodifiziertes Alkydharz enthält.

3. Putz nach Anspruch 1 oder 2, dadurch gekennzeichnet, daß er als Füllstoffe
   1,8 bis 6,6 Gew.Teile Acrylharz-Fasern,
   168 bis 576 Gew.-Teile Calciumcarbonat und
   300 bis 600 Gew.-Teile Sand enthält.

4. Putz nach einem oder mehreren der Ansprüche 1 bis 3, dadurch gekennzeichnet, daß er zusätzlich 12 bis 36 Gew.-Teile Monoisobutyläther des Propylenglykols enthält.

5. Putz nach einem oder mehreren der Ansprüche 1 bis 4, dadurch gekennzeichnet, daß er zusätzlich 1,2 bis 6,0 Gew.-Teile Dioctylphthalat enthält.

3

6. Putz nach einem oder mehreren der Ansprüche 1 bis 5, dadurch gekennzeichnet, daß er zusätzlich 18 bis 60 Gew.-Teile Chlorparaffine-Weichharz enthält.

7. Putz nach einem oder mehreren der Ansprüche 1 bis 6, dadurch gekennzeichnet, daß er zusätzlich 1,2 bis 6,0 Gew.-Teile oberflächenaktive aliphatische Fettsäure mit stark polaren Aminoamidgruppen enthält.

8. Putz nach einem oder mehreren der Ansprüche 1 bis 7, dadurch gekennzeichnet, daß er zusätzlich 6,0 bis 13,2 Gew.-Teile mittelkettiges Siliconharz enthält.

9. Putz nach einem oder mehreren der Ansprüche 1 bis 8, dadurch gekennzeichnet, daß er zusätzlich 0,36 bis 8,4 Gew.-Teile Acrylester-Lackharz-Entlüfter enthält.

10. Putz nach einem oder mehreren der Ansprüche 1 bis 9, dadurch gekennzeichnet, daß er zusätzlich

72 bis 84 Gew.-Teile eines Gemisches bestehend aus

84 % aromatenfreiem Testbenzin,

10 % Magnesiumsilicat,

1 % Alkydglykoläther eines phosphorsauren Aminsalzes und

5 % Methylalkohol enthält.

11. Putz nach einem oder mehreren der Ansprüche 1 bis 10, dadurch gekennzeichnet, daß er zusätzlich 36 bis 84 Gew.-Teile Pigmente enthält.

## Claims

1. Stucco containing a binder based on organic synthetic resins and fillers, for applying to polystyrene hard foam panels, characterised in that it contains

a) 12 to 60 parts by weight of synthetic resin based on a styrene-acrylate copolymer,

b) 5 to 33 parts by weight of acrylate ester varnish resin,

c) 74 to 154 parts by weight of white spirit free of aromatic substances,

d) 6 to 30 parts by weight of aromatic solvent, and

e) 470 to 1 200 parts by weight of fillers.

2. Stucco according to claim 1, characterised in that it contains additionally 6 to 30 parts by weight of urethane-modified alkyd resin.

3. Stucco according to claim 1 or 2, characterised in that it contains as fillers

1.8 to 6.6 parts by weight of acrylic resin fibres,

168 to 576 parts by weight of calcium carbonate, and

300 to 600 parts by weight of sand.

4. Stucco according to one or more of claims 1 to 3, characterised in that it contains additionally 12 to 36 parts by weight of monoisobutyl ether of propylene glycol.

5. Stucco according to one or more of claims 1 to 4, characterised in that it contains additionally 1.2 to 6.0 parts by weight of dioctyl phthalate.

6. Stucco according to one or more of claims 1 to 5, characterised in that it contains additionally 18 to 60 parts by weight of chlorinated paraffin soft resin.

7. Stucco according to one or more of claims 1 to 6, characterised in that it contains additionally 1.2 to 6.0 parts by weight of surface-active aliphatic fatty acid with strongly polar aminoamide groups.

8. Stucco according to one or more of claims 1 to 7, characterised in that it contains additionally 6.0 to 13.2 parts by weight of medium-chain silicone resin.

9. Stucco according to one or more of claims 1 to 8, characterised in that it contains additionally 0.36 to 8.4 parts by weight of acryl ester varnish resin de-aerator.

10. Stucco according to one or more of claims 1 to 9, characterised in that it contains additionally

72 to 84 parts by weight of a mixture consisting of

84 % white spirit free of aromatic substances,

10 % magnesium silicate,

1 % alkyd glycol ether of an amine salt of phosphoric acid and

5 % methyl alcohol.

11. Stucco according to one or more of claims 1 to 10, characterised in that it contains additionally 36 to 84 parts by weight of pigments.

## Revendications

1. Enduit contenant des liants à base de résines synthétiques organiques et des charges, pour l'application sur des panneaux de polystyrène alvéolaire dur, caractérisé par le fait qu'il contient :

a) 12 à 60 parties en poids de résine synthétique à base d'un produit de copolymérisation styrène/acrylate,

b) 5 à 33 parties en poids de résine pour peintures d'ester acrylate,

c) 74 à 154 parties en poids de white spirit exempt d'éléments aromatiques,

d) 6 à 30 parties en poids de solvant aromatique, et

e) 470 à 1 200 parties en poids de charges.

2. Enduit selon la revendication 1, caractérisé par le fait qu'il contient en outre 6 à 30 parties en poids de résine alkyde modifiée par uréthanne.

3. Enduit selon l'une des revendications 1 et 2, caractérisé par le fait qu'il contient comme charges :

1,8 à 6,6 parties en poids en fibres de résine acrylique,

168 à 576 parties en poids de carbonate de calcium et

300 à 600 parties en poids de sable.

4. Enduit selon une ou plusieurs des revendications 1 à 3, caractérisé par le fait qu'il contient en outre 12 à 36 parties en poids d'éther monoisobutylique du propylèneglycol.

5. Enduit selon une ou plusieurs des revendications 1 à 4, caractérisé par le fait qu'il contient en outre 1,2 à 6,0 parties en poids de phtalate de dioctyle.

6. Enduit selon une ou plusieurs des revendications 1 à 5, caractérisé par le fait qu'il contient en outre 18 à 60 parties en poids de résine molle de chloroparaffines.

7. Enduit selon une ou plusieurs des revendications 1 à 6, caractérisé par le fait qu'il contient en outre 1,2 à 6,0 parties en poids d'acide gras aliphatique surfactif contenant des groupes aminoamide fortement polaires.

8. Enduit selon une ou plusieurs des revendications 1 à 7, caractérisé par le fait qu'il contient en outre 6,0 à 13,2 parties en poids de résine de silicone à chaîne moyenne.

9. Enduit selon une ou plusieurs des revendications 1 à 8, caractérisé par le fait qu'il contient en outre 0,36 à 8,4 parties en poids de désaérateur de résine pour peintures d'ester acrylique.

10. Enduit selon une ou plusieurs des revendications 1 à 9, caractérisé par le fait qu'il contient en outre :

72 à 84 parties en poids d'un mélange formé de

84 % de white spirit exempt d'éléments aromatiques,

10 % de silicate de magnésium

1 % d'éther d'alkydglycol d'un sel d'amine d'acide phosphorique, et

5 % d'alcool méthylique.

11. Enduit selon une ou plusieurs des revendications 1 à 10, caractérisé par le fait qu'il contient en outre 36 à 84 parties en poids de pigments.